Europäisches Patentamt

European Patent Office

Office européen des brevets

(19)

(11) Numéro de publication: **0 230 178**
**A1**

(12) ## DEMANDE DE BREVET EUROPEEN

(21) Numéro de dépôt: **86402710.7**

(51) Int. Cl.4: **A01J 5/10** , A01J 5/04

(22) Date de dépôt: **08.12.86**

(30) Priorité: **09.12.85 FR 8518183**

(43) Date de publication de la demande:
**29.07.87 Bulletin 87/31**

(84) Etats contractants désignés:
**AT BE CH DE ES GB GR IT LI LU NL SE**

(71) Demandeur: **AGRILEC S.á.r.L**
**4 rue des Richardes**
**F-02400 Château Thierry(FR)**

(72) Inventeur: **Radtke, Hans-Jürgen**
**4, rue des Richardes**
**F-02400 Château-Thierry(FR)**

(74) Mandataire: **Lepeudry-Gautherat, Thérèse et al**
**CABINET LEPEUDRY 6 rue du Faubourg St-Honoré**
**F-75008 Paris(FR)**

(54) **Procédé de traite alternée et décalée, et pulsateur rotatif pour sa mise en oeuvre.**

(57) L'invention est relative à un procédé de traite alternée concernant l'ensemble des animaux d'une salle de traite, dans lequel on exerce une aspiration (160) sur des premiers pis de chaque animal (C) pour en tirer le lait, puis en soustrait ces premiers pis à ladite aspiration pour effectuer leur massage (163) pendant qu'on exerce une aspiration (171) sur des seconds pis de l'animal (C).

Selon l'invention, on sépare l'ensemble des animaux en deux groupes, une aspiration simultanée sur des premiers pis des animaux (C) du premier groupe étant exercée pendant un intervalle de temps décalé par rapport à celui pendant lequel une aspiration simultanée est exercée sur des premiers pis des animaux (D) du second groupe.

Application notamment dans les grandes installations de traite automatique.

Fig. 13

EP 0 230 178 A1

## Procédé de traite alternée et décalée, et pulsateur rotatif pour sa mise en oeuvre.

L'invention est relative à un procédé de traite alternée et à un dispositif pour sa mise en oeuvre. Elle s'applique en particulier à la traite simultanée d'un grand nombre d'animaux.

Selon les procédés classiques de traite automatique d'animaux tels que des vaches ou des chèvres, on relie les pis de chaque animal à une canalisation de récupération du lait dans laquelle règne en permanence un vide déterminé permettant d'aspirer le lait présent dans les trayons de ces pis. Afin de ne pas soumettre de façon continue chaque trayon à ce vide permanent, ce trayon est coiffé d'un gobelet-trayeur qui renferme un manchon-trayeur souple délimitant dans le gobelet-trayeur un espace central ou chambre de traite et un espace annulaire. La chambre de traite est reliée à la canalisation de lait tandis que l'espace annulaire est relié à un pulsateur qui le met en communication alternativement avec un circuit à vide et avec l'atmosphère, provoquant respectivement le relâchement du manchon-trayeur et l'aspiration par la canalisation de lait, ou l'aplatissement du manchon-trayeur sur le trayon et donc le massage de ce dernier.

En conséquence pour effectuer une traite alternée selon les procédés connus, on exerce une aspiration sur des premiers pis d'au moins un animal pour en tirer le lait, puis on soustrait ces premiers pis à ladite aspiration pour effectuer leur massage pendant qu'on exerce une aspiration sur des seconds pis de l'animal. Par ailleurs, tous les animaux sont traits simultanément en synchronisme : les phases d'aspiration et de massage relatives à des premiers pis (respectivement des seconds pis) des différents animaux coïncident.

La coïncidence des phases d'aspiration sur les pis des différents animaux correspond à une consommation simultanée de vide qui ne présente pas d'inconvénient particulier. En revanche, la coïncidence des phases de massage de pis correspond à une introduction d'air massive dans l'installation de traite, à un moment donné du cycle de traite, qui résulte de l'envoi d'air dans chacun des gobelets-trayeurs. Cette introduction d'air déséquilibre naturellement le niveau de vide régnant dans l'installation : ce déséquilibre est notamment transmis, par l'intermédiaire de la canalisation de lait, au circuit à vide auquel cette dernière est reliée, et se répercute au niveau de la commande des gobelets-trayeurs par ce même circuit à vide. La qualité de la traite s'en trouve donc sensiblement affectée.

Ces procédés classiques sont néanmoins satisfaisants dans le cas des petites et moyennes installations de traite (pouvant traire jusqu'à six animaux simultanément). Par contre, dans le cas d'installations plus importantes, ces procédés ne conviennent pas. Dans ces installations, un grand nombre de consommateurs d'air atmosphérique, outre les pulsateurs, sont présents : les nombreuses garnitures de traite, les systèmes de décrochage automatique, les compteurs à lait, les tuyaux longs à lait et longs à air qui présentent des défectuosités, etc...

L'instabilité du niveau de vide provoquée d'une part par les pulsateurs, c'est-à-dire par l'envoi d'air dans les gobelets-trayeurs, et d'autre part par les différents consommateurs d'air précités atteint alors un niveau compromettant la qualité de la traite.

En vue de résoudre ces problèmes, il est enseigné dans le brevet français n° 2.230.289 de traire un ensemble d'animaux en "cascade" c'est-à-dire en décalant dans le temps la traite de chaque animal par rapport au précédent. Un tel procédé permet effectivement de régulariser le niveau de vide dans l'installation. Toutefois, en vue d'obtenir une régularisation optimale, il faudrait que les cycles de traite des différents animaux soient répartis les uns par rapport aux autres d'une certaine façon dans le temps, qui permette de réduire au mieux la coïncidence entre les phases de massage relatives aux différents animaux.

Or, dans le cas du procédé décrit dans ce brevet, pour un nombre d'animaux donné, cette répartition régulière sera obtenue en jouant sur la valeur du temps de décalage entre les traites des animaux. Autrement dit, la valeur du temps de décalage optimal dépendra du nombre d'animaux considérés, ce qui n'est pas souhaitable en pratique. On notera que le procédé de commande de chaque pulsateur consistant à brancher celui-ci en aval du précédent ne permet pas d'effectuer un réglage précis de la valeur du temps de décalage.

En fait, le réglage précis du temps de décalage optimal suppose l'emploi d'un dispositif de commande pour chaque pulsateur, c'est-à-dire pour chaque animal, puisque chaque pulsateur est décalé par rapport à tous les autres et doit donc recevoir un signal de commande spécifique. Le procédé est donc coûteux et complexe de mise en oeuvre, dans la mesure où il exige un grande nombre de dispositifs de commande, chacun d'eux devant être réglé.

Le but de l'invention est de proposer un procédé de traite alternée qui permet de maintenir un niveau de vide dans l'installation de traite qui soit le plus constant possible, quelque soit le nombre d'animaux considérés, et qui n'exige pas des moyens de commande complexes et coûteux.

L'invention concerne à cet effet un procédé de traite alternée concernant l'ensemble des animaux d'une salle de traite, dans lequel on exerce une aspiration sur des premiers pis de chaque animal pour en tirer le lait, puis on soustrait ces premiers pis à ladite aspiration pour effectuer leur massage pendant qu'on exerce une aspiration sur des seconds pis de l'animal, procédé caractérisé par le fait qu'on sépare l'ensemble des animaux en deux groupes, une aspiration simultanée sur des premiers pis des animaux du premier groupe étant exercée pendant un intervalle de temps décalé par rapport à celui pendant lequel une aspiration simultanée est exercée sur des premiers pis des animaux du second groupe.

Avantageusement on effectue le décalage susdit de façon que la durée de coïncidence entre les deux intervalles de temps correspondant respectivement aux opérations de massage des permiers pis des animaux du premier groupe et des animaux du second groupe soit la plus faible possible.

Ainsi, selon l'invention, on répartit sur toute la durée du cycle de traite les phases de massage des pis de deux groupes d'animaux différents, en tenant compte du fait que, pour un groupe donné, il existe un laps de temps -à savoir la phase d'aspiration-pendant lequel il ne se produit pas de massage : on effectue avantageusement le massage d'un second groupe pendant ce laps de temps.

L'invention concerne aussi un pulsateur de traite spécialement conçu pour la mise en oeuvre du procédé selon l'invention. Il s'agit d'un pulsateur de traite comprenant un corps, une entrée d'air atmosphérique et une entrée raccordée à une canalisation à vide, au moins une sortie, un distributeur qui est monté rotatif par rapport audit corps, entre lesdites entrées et ladite sortie, et des moyens d'entraînement en rotation dudit distributeur, ledit distributeur étant agencé de façon que dans au moins une position angulaire prédéterminée de ce dernier ladite sortie est reliée à ladite entrée d'air atmosphérique, tandis que dans au moins une autre position angulaire prédéterminée cette sortie est reliée à ladite entrée raccordée à la canalisation à vide.

Depuis fort longtemps, on a cherché à utiliser un pulsateur de ce type, qui permettrait d'effectuer la traite alternée d'un animal au moyen d'un seul appareil au lieu de deux. Un tel pulsateur est notamment décrit dans le brevet britannique N° 622.541 datant d'une quarantaine d'années. D'autres brevets tels que le brevet français n° 2.363.279 et le brevet américain n° 3.499.465 témoignent de l'intérêt porté par les industriels au pulsateur à distributeur rotatif. Or, à la connaissance de la Demanderesse, le pulsateur à distributeur rotatif n'a jamais été vraiment utilisé par les industriels.

Selon la Demanderesse, cette situation résulte probablement des difficultés recontrées dans l'utilisation d'un tel pulsateur. Afin de maintenir le distributeur rotatif en rotation pendant toute la durée de l'opération de traite, un moteur à collecteur ou un moteur à induction synchrone ou asynchrone est habituellement envisagé. Compte tenu de l'inertie des parties tournantes (distributeur et rotor du moteur), la vitesse de rotation du moteur ne peut être modifiée que progressivement. En pratique, la vitesse est maintenue constante et on prévoit des évidements dans le distributeur rotatif, dont la disposition et les dimensions permettent de reproduire le cycle de traite souhaité.

Une telle solution est peu souple d'emploi, puisque le rapport cyclique (rapport entre la durée de la phase d'aspiration et celle de la phase de massage) ne peut être modifié qu'en changeant de distributeur. Seule la période du cycle peut être modifiée en ajustant la vitesse de rotation du moteur.

Or, les industriels réclament de plus en plus des dispositifs de traite pouvant être adaptés à leurs besoins propres, c'est-à-dire dans lesquels non seulement la période du cycle de traite mais aussi le rapport cyclique peuvent être modifiés.

Il se pose aussi le problème de la synchronisation de l'ensemble des pulsateurs de l'installation de traite. En vue d'effectuer la traite alternée et décalée selon l'invention, chaque moteur de pulsateur doit être mis en rotation à un instant bien précis et à partir d'une position angulaire bien précise. Les moteurs des types précités ne permettent pas de parvenir correctement à ce résultat.

De façon surprenante, la Demanderesse a réussi à reconstituer un cycle de traite en utilisant un moteur pas-à-pas. Un tel moteur fonctionne sur le principe d'attractions magnétiques déclenchées par des impulsions de commande. A chaque impulsion, le rotor du moteur tourne d'un certain angle puis s'immobilise. Ce moteur fonctionne donc exclusivement de façon intermittente.

A priori, l'utilisation d'un tel moteur ne pouvait être envisagée pour produire un cycle de traite continu dans lequel une aspiration continue et régulière, puis un envoi d'air également continu et régulier se succèdent. En effet, comme cela sera expliqué en détail par la suite, le déplacement du rotor d'un moteur pas-à-pas, d'une position angulaire à une autre, s'effectue dans un certain laps de temps pendant lequel sa position angulaire est imprécise et ne permet pas d'effectuer correctement les liaisons nécessaires entre les entrées et les sorties du pulsateur.

Néanmoins, des essais effectués par la Demanderesse ont montré que l'on pouvait reconstituer de façon satisfaisante un cycle de traite à partir de quatre portions de cycle juxtaposées et correspondant à quatre positions angulaires du rotor du moteur pas-à-pas. Autrement dit, il est apparu que les erreurs introduites par la mise en rotation du moteur pas-à-pas pouvaient être négligées.

Avantageusement, le pulsateur selon l'invention comprend des moyens de butée mécanique pour limiter l'angle de rotation du distributeur par rapport au corps.

Une autre raison pour laquelle l'utilisation d'un moteur pas-à-pas ne pouvait pas être envisagée pour la traite des animaux est que les dispositifs connus de commande d'un tel moteur apparaissent beaucoup trop complexes et coûteux pour la traite. C'est pourquoi la Demanderesse a développé un nouveau dispositif de commande, à la fois économique et simple d'emploi.

Avantageusement, le moteur électrique pas-à-pas, qui comporte un nombre déterminé d'enroulements, est commandé par un programmateur qui comprend des moyens d'alimentation en énergie électrique, un générateur d'impulsions relié à ces moyens d'alimentation, un compteur pour compter les impulsions dudit générateur d'impulsions, une mémoire comprenant plusieurs zones-mémoire distinctes en nombre au moins égal au nombre d'enroulements dudit moteur électrique pas-à-pas et dans chacune desquelles sont stockés des bits en nombre au moins égal au nombre d'impulsions par cycle de traite, et relatifs à l'excitation de l'un desdits enroulements, et des moyens pour transmettre les signaux de sortie provenant desdites zones-mémoire aux enroulements dudit moteur électrique pas-à-pas.

Avantageusement, la mémoire est adressable, et le compteur est un convertisseur décimal-binaire qui produit, pour chaque impulsion envoyée par le générateur d'impulsions, un nombre binaire déterminé adressant la mémoire.

Avantageusement, la mémoire comporte une cassette séparée enfichable.

D'autres détails et avantages de l'invention apparaîtront au cours de la description qui suit, d'un mode de réalisation donné à titre d'exemple non limitatif, en regard des figures annexées parmi lesquelles :

-la figure 1 est une vue éclatée en perspective du pulsateur selon l'invention ;

-les figures 2, 3, 4 et 5 sont des vues en plan et en coupe, notamment selon les lignes II-II et III-III des figures 2 B et 3 B représentant les différentes positions relatives entre le corps de pulsateur et le distributeur ;

-les figures 2A et 2B sont des vues en coupe selon les lignes A-A et B-B de la figure 2 ;

-la figure 3B est une vue en coupe selon la ligne B-B de la figure 3 ;

-les figures 6 et 7 représentent deux cycles de traite relatifs respectivement au conduit de sortie 2 et au conduit de sortie 3 du pulsateur selon l'invention ;

-la figure 8 représente schématiquement un dispositif électronique de commande du moteur du pulsateur ;

-les figures 9 et 10 sont deux vues en plan et en coupe du pulsateur, montrant des moyens de butée entre le distributeur et le corps du pulsateur ;

-la figure 11 représente un diagramme des temps qui illustre le principe de programmation du dispositif de la figure 8;

-la figure 12 représente un diagramme des temps relatif au procédé classique de traite alternée ; et

-la figure 13 représente un diagramme des temps relatif au procédé de traite alternée selon l'invention.

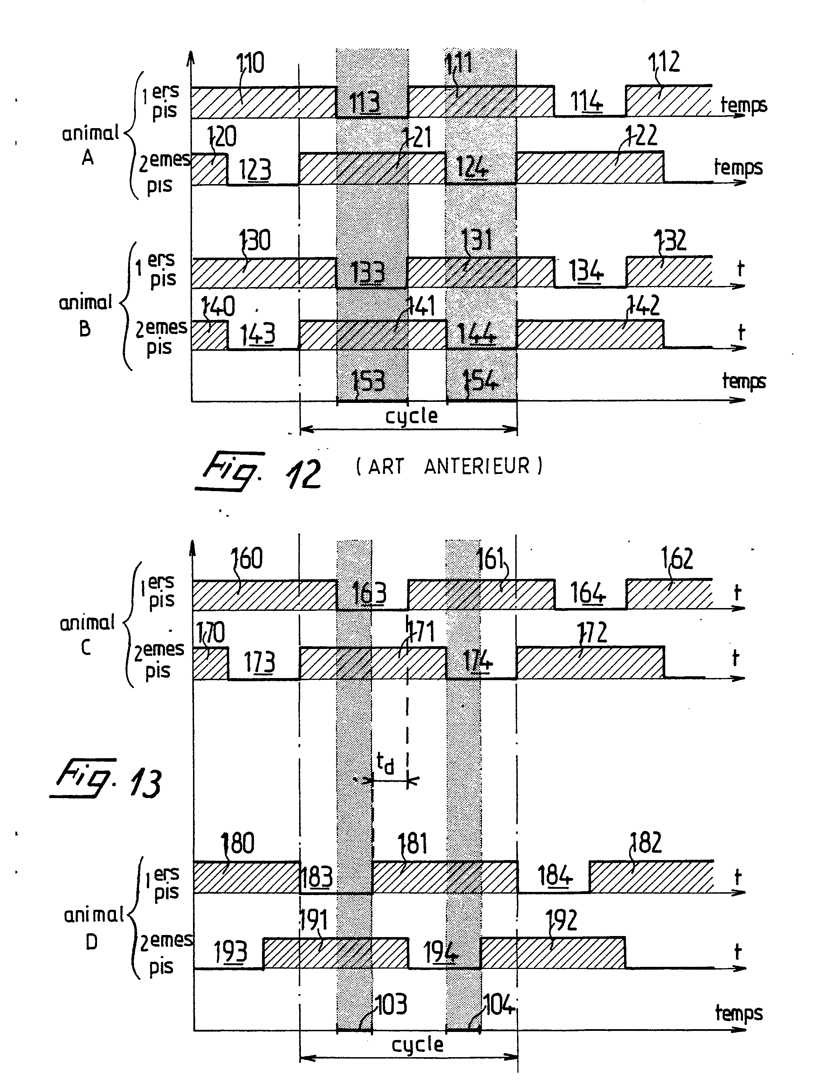

Le diagramme de la figure 12 correspond au diagramme de traite de deux animaux A, B présentant chacun une ou plusieurs paires de pis. L'ensemble de ces pis est divisé en deux parties, à savoir des premiers et seconds pis que l'on trait en alternance. On a représenté par des blocs successifs 110, 111, 112 quelques intervalles de temps ou phases pendant lesquels a lieu une aspiration des premiers pis de l'animal A : les espaces 113, 114 entre ces blocs représentent des phases pendant lesquelles a lieu un massage de ces premiers pis.

Selon ce procédé de traite connu, les deuxièmes pis de l'animal A sont traits en opposition de phase par rapport aux premiers pis : les blocs 120, 121 et 122 représentant quelques phases d'aspiration sur des seconds pis sont décalés dans le temps de façon qu'ils coïncident avec des phases de massage 113, 114 relatives aux premiers pis. Autrement dit, les cycles de traite des seconds pis sont décalés d'une demi-période par rapport à ceux des premiers pis, une période correspondant à la durée d'un cycle de traite, c'est-à-dire au temps écoulé pour effectuer une phase d'aspiration et une phase de massage. En conséquence, les phases de massage 123, 124 des seconds pis coïncident avec les phases d'aspiration 110, 111 sur les premiers pis.

Les pis de l'animal B sont traits de la même façon que ceux de l'aminal A. Le diagramme de traite des premiers pis comprend des phases d'aspiration 130, 131, 132 alternant avec des phases de massage 133, 134 et celui des seconds pis des phases d'aspiration 140, 141, 142 alternant avec des phases de massage 143, 144. Par ailleurs, ces deux diagrammes sont en opposition de phase.

Si l'on compare le diagramme de traite des premiers pis de l'animal A et celui des premiers pis de l'animal B, on constate que, selon ce procédé connu, ces diagrammes coïncident : les phases d'aspiration 110, 111, 112 de l'un ont lieu en même temps que les phases d'aspiration 130, 131, 132 de l'autre, et les phases de massage 113,114 de l'un ont lieu en même temps que celles 133,134 de l'autre. Il en résulte que les diagrammes de traite des seconds pis des animaux A et B coïncident également. Comme indiqué sur la figure 12, on peut représenter la durée de coïncidence des phases de massage, pour un cycle donné, par des segments. Le segment 153 représente la coïncidence des phases de massage 113, 133 et le segment 154 la coïncidence des phases de massage 124, 144.

Le diagramme de traite de la figure 13 conforme à l'invention concerne deux animaux C et D. De façon analogue à la figure 12, les premiers pis de l'animal C sont traits suivant des phases d'aspiration 160, 161, 162 alternant avec des phases de massage 163, 164, et ses seconds pis sont traits suivant des phases d'aspiration 170, 171, 172 et de massage 173, 174. De la même façon, les premiers pis (respectivement seconds pis) de l'animal D subissent une aspiration 180, 181 182 (respectivement 191, 192) et un massage en 183, 184 (respectivement 193, 194). Par ailleurs, les cycles de traite relatifs aux seconds pis sont pour les deux animaux C et D, en opposition de phase par rapport à ceux des premiers pis correspondants.

Le diagramme de la figure 13 se distingue par le fait que les cycles de traite des premiers pis de l'animal C sont décalés, soit en retard d'un temps $t_d$, par rapport à ceux de l'animal D.

Tel que figuré, ce retard est mis en évidence entre la phase d'aspiration 161 de l'animal C et celle 181 de l'animal D. Il en résulte que les cycles de traite des seconds pis de l'animal C sont décalés d'une même valeur $t_d$ par rapport à ceux des seconds pis de l'animal D.

La durée de coïncidence entre les phases de massage des deux animaux C et D est représentée, pour un cycle de traite, par les deux segments 103, 104 qui correspondent respectivement à la coïncidence des phases 163,183 et 174, 194.

Ces segments sont de longueur nettement inférieure aux segments 153, 154 relatifs au procédé classique. Dans le cas présent où les phases d'aspiration représentent 67 % du cycle et où les phases de massage représentent 33 % du cycle, la durée de coïncidence entre les phases de massage est divisée environ par deux, et le temps de décalage $t_d$ optimal correspond environ à la moitié de la durée d'une phase de massage.

Cela signifie que le temps pendant lequel la consommation d'air par l'installation est maximale a été réduit de moitié. Les effets néfastes dûs à ce niveau élevé de consommation d'air s'en trouvent sensiblement réduits.

Naturellement, la quantité globale d'air atmosphérique consommée est la même qu'en l'absence de décalage, et l'on ne peut envisager de la réduire. Le procédé selon l'invention assure seulement une meilleure répartition de la consommation d'air sur le cycle de traite.

Ce procédé permet non seulement d'améliorer la qualité de la traite en stabilisant le circuit à vide, mais aussi de régulariser l'écoulement du lait dans la canalisation de lait et d'une façon générale de limiter les inconvénients dûs à l'instabilité du vide dans toute l'installation de traite.

Quel que soit le rapport cyclique de traite choisi, c'est-à-dire le rapport entre la durée de la phase d'aspiration et celle de la phase de massage, on prendra de préférence comme temps de décalage $t_d$ optimal, un temps égal à la moitié de la durée de la phase de massage choisie.

En pratique, l'ensemble des animaux d'une salle de traite sera séparé en deux groupes comprenant chacun de préférence un même nombre d'animaux, un groupe étant trait de la même façon que l'animal C et l'autre groupe de la même façon que l'animal D.

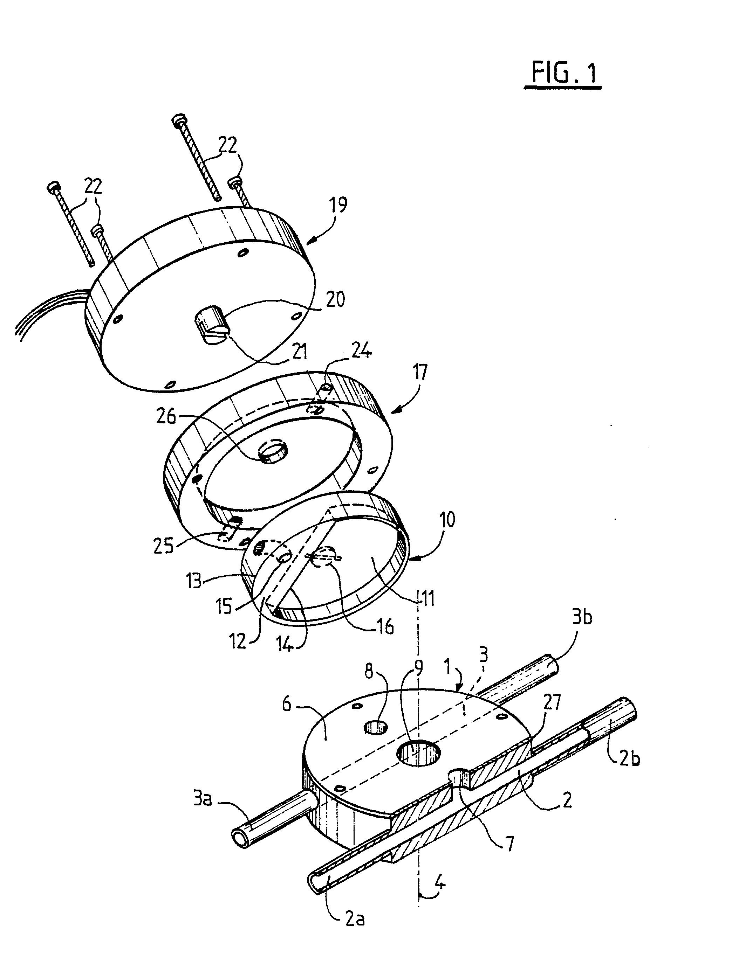

Le pulsateur représenté sur les figures 1 à 5 comprend un corps 1 en forme de disque épais, dans l'épaisseur duquel sont pratiqués deux conduits de sortie 2, 3 séparés qui correspondent aux deux voies distinctes d'un pulsateur pour traite alternée. Ces conduits de sortie 2, 3 s'étendent parallèlement entre eux et parallèlement au plan général du corps 1, et sont disposés symétriquement par rapport à l'axe 4 du corps 1. Ces conduits de sortie 2, 3 se prolongent de chaque côté à l'extérieur du corps selon des extensions tubulaires 2a, 2b et 3a, 3b saillant à partir de la surface latérale 5 du corps 1 et permettant de traire deux animaux simultanément.

Les conduits de sortie 2, 3 débouchent par ailleurs sur l'une des faces principales 6 du corps 1 grâce à des orifices de raccordement 7, 8, dans la partie médiane des conduits de sortie 2, 3. Les orifices de raccordement 7,8 s'étendent parallèlement à l'axe 4 du corps 1 et sont symétriques par rapport à cet axe. Le corps 1 présente par ailleurs une ouverture axiale traversante 9.

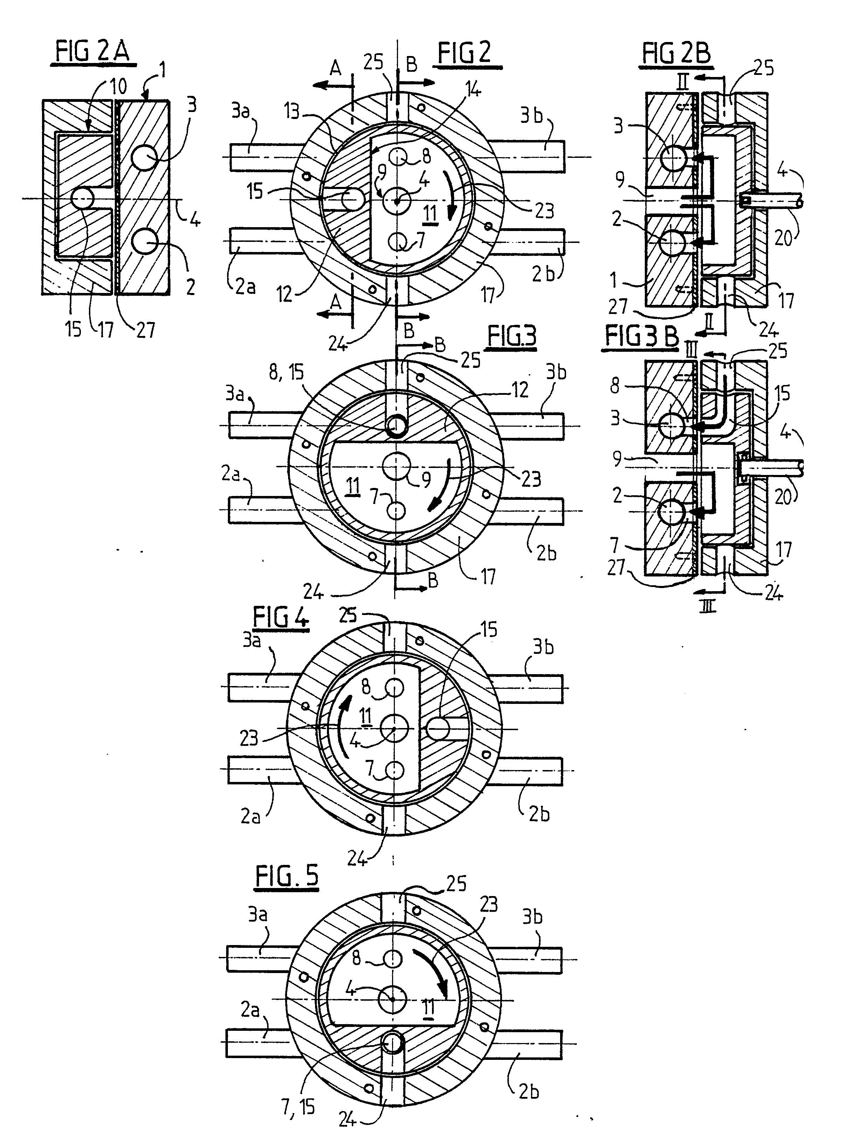

Le pulsateur selon l'invention comprend encore un distributeur 10 également en forme de disque épais, dont le diamètre est inférieur à celui du corps 1 dans cet exemple de réalisation. Le distributeur 10 est évidé du côté de l'une de ses faces principales pour former une chambre à vide 11. Toutefois, le distributeur 10 n'est pas évidé sur une portion réduite de cette face principale, qui correspond à un segment circulaire 12, c'est-à-dire une surface limitée géométriquement par un arc de courbe 13 du distributeur 10 et une corde 14 qui sous-tend cet arc de courbe 13 (figures 1 et 2).

La distance entre la corde 14 et l'axe du distributeur 10 est telle que, une fois ce distributeur disposé coaxialement contre le corps 1, cette corde 14 soit située radialement entre l'ouverture axiale 9 du corps 1 et lesdits orifices de raccordement 7, 8 du corps (figures 3 et 5).

Le distributeur 10 est traversé par un canal 15 en forme de L qui s'étend à l'intérieur du segment circulaire 12 et débouche d'une part sur la face principale évidée du distributeur 10 à côté de la chambre à vide 11, et d'autre part sur la face latérale du distributeur 10. Le canal 15 s'étend dans un plan perpendiculaire à la corde 14. Le canal 15 débouche à côté de la chambre à vide 11 à une distance de l'axe du distributeur 10 qui est égale à la distance entre les orifices de raccordement 7, 8 du corps 1 et l'axe 4 de ce dernier. Par ailleurs, le diamètre du canal 15 est de préférence égal à celui des orifices de raccordement 7, 8.

Le distributeur présente en outre, disposé au centre de sa face opposée à la chambre à vide 11, un évidement allongé 16 non traversant, destiné à loger une goupille d'entraînement en rotation.

Le pulsateur selon l'invention comprend également un support de moteur 17 en forme de coupelle circulaire dont le diamètre intérieur est légèrement supérieur au diamètre extérieur du distributeur 10, et dont le diamètre extérieur correspond de préférence à celui du corps 1. La hauteur intérieure du support de moteur 17 est légèrement supérieure à l'épaisseur du distributeur 10. Dans la paroi latérale du support de de moteur 17 sont pratiqués deux trous traversants 24, 25 qui s'étendent radialement et sont diamétralement opposés. Par ailleurs, le fond du support de moteur 77 présente une ouverture axiale 26 traversale

Le pulsateur selon l'invention comprend enfin un moteur électrique pas-à-pas 19, par exemple un moteur de référence HY 100-1713 fabriqué par la Société MOTORI APPARECCHIATURE ELETTRICHE. Le moteur 19 présente avantageusement un diamètre identique au diamètre extérieur du support de moteur 17 et du corps 1. Il possède un arbre d'entraînement 20 fendu à son extrémité 21.

En vue d'assembler le pulsateur décrit précédemment, on dispose le distributeur 10 coaxialement contre le corps 1, sa chambre à vide 11 étant tournée vers la face du corps 1 qui porte les orifices de raccordement 7, 8.

Toutefois, une rondelle circulaire 27 présentant un faible coefficient de frottement est interposée entre le corps 1 et le distributeur 10, sans masquer les perçages du corps 1. Le support de moteur 17 coiffe le distributeur 10 et est positionné de façon que ses trous traversants 24, 25 soient, vu en plan (figure 2), alignés avec les orifices de raccordement 7, 8 du corps 1 : il reçoit le moteur 19, en appui sur son fond. L'extrémité fendue 21 de l'arbre d'entraînement 20 du moteur 19 vient alors chevaucher la goupille d'entraînement portée par le distributeur 10. L'ensemble est réuni par exemple au moyen de vis 22. De cette façon, le distributeur 10 est entraîné en rotation sur lui-même par le moteur 19 et peut tourner par rapport au corps 1 pour occuper différentes positions angulaires déterminées.

Le pulsateur de la figure 1 est raccordé à une installation de traite de la manière suivante. Les conduits de sortie 2, 3 du corps 1 sont respectivement reliés à des premiers pis et à des seconds pis d'au moins un animal. L'ouverture axiale 9 du corps 1 constitue une entrée reliée, du côté opposé au distributeur 10, à une canalisation à vide. Enfin, l'entrée d'air atmosphérique comprend les deux trous traversants 24, 25 du support de moteur 17, et le canal 15 du distributeur 10, comme expliqué ci-après. On remarquera que le distributeur 10 est ainsi disposé entre l'entrée d'air comprenant les trous traversants 24, 25 du support de moteur 17 et l'entrée raccordée à la canalisation à vide, c'est-à-dire l'ouverture axiale 9 du corps 1.

Le fonctionnement du pulsateur va maintenant être expliqué. Une première position angulaire du distributeur 10 par rapport au corps 1 est représentée en figure 2. Son segment circulaire 12 s'étend parallèlement à la ligne définie par l'ouverture axiale 9 et les orifices de raccordement 7, 8 du corps 1. Dans cette situation la chambre à vide 11, qui coiffe l'ouverture axiale 9 dans toute position angulaire, coiffe également les deux orifices de raccordement 7, 8 : la dépression provenant de la canalisation à vide se propage dans les conduits de sortie 2, 3 (figure 2B). Par contre, le canal 15 du distributeur 10 est fermé à une extrémité par la surface adjacente de la rondelle 27 (figure 2A) et à l'autre extrémité par la paroi adjacente du support de moteur 17 (figure 2) : l'air atmosphérique ne parvient donc pas aux conduits de sortie 2, 3.

Après une rotation de 90° du distributeur 10 dans le sens horaire, (flèche 23), son segment circulaire 12 s'étend perpendiculairement à la ligne formée par l'ouverture axiale 9 et les orifices de raccordement 7,8 (figure 3). Plus précisément (figure 3B) le canal 15 du distributeur 10 est à l'aplomb de l'orifice de raccordement 8 ; en outre, le canal 15 est également en regard du trou traversant 25 du support de moteur 17 : l'air atmosphérique parvient donc au conduit de sortie 3. Par ailleurs, la chambre à vide 11 ne coiffe plus que l'ouverture axiale 9 et l'autre orifice de raccordement 7 : la dépression provenant de l'ouverture axiale 9 parvient donc encore au conduit de sortie correspondant 2.

Après une nouvelle rotation de 90° dans le sens horaire (figure 4), le distributeur 10 occupe une position symétrique de celle qu'il occupait en figure 2, par rapport à l'axe 4 du corps 1. Les liaisons obtenues entre les entrées et les sorties sont donc les mêmes qu'en figure 2.

Enfin après une troisième rotation de 90° dans le sens horaire (figure 5) le distributeur 10 occupe une position symétrique de celle qu'il occupait en figure 3, par rapport à l'axe 4 du corps 1. Ainsi le canal 15 du distributeur 10 est cette fois-ci à l'aplomb de l'autre orifice de raccordement 7 du corps 1 et en regard de l'autre trou traversant 24 du support de moteur 17 : l'air atmosphérique parvient au conduit de sortie 2. Par ailleurs, la chambre à vide 11 coiffe l'ouverture axiale 9 et l'orifice de raccordement 8 : la dépression provenant de l'ouverture axiale 9 parvient donc au conduit de sortie 3.

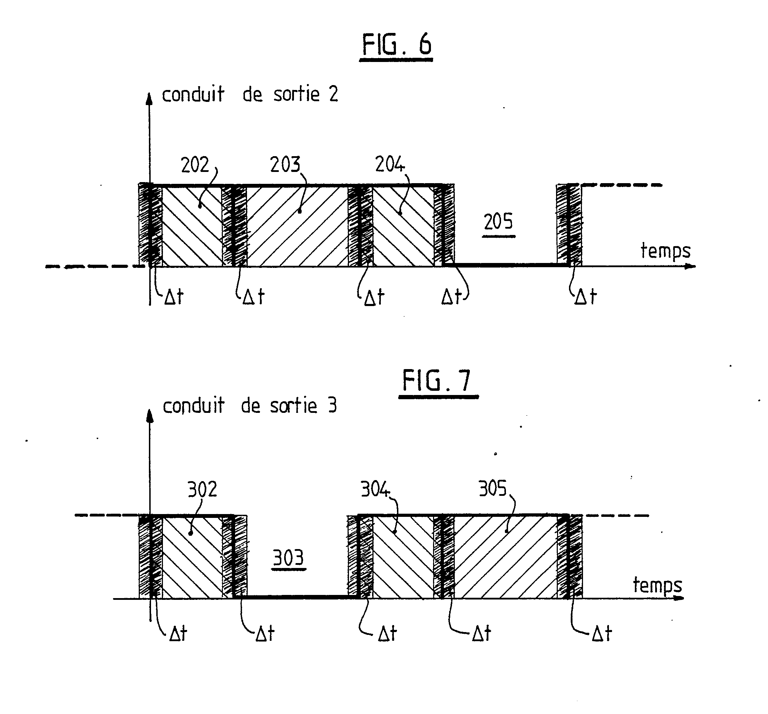

Un exemple d'utilisation du pulsateur décrit précédemment est maintenant donné en regard des figures 6 et 7. Deux cycles de traite alternés sont obtenus, selon une fréquence égale à soixante cycles par minute et un rapport cyclique égal à 700/300 (c'est-à-dire le rapport entre la durée de la phase d'aspiration sur les pis de l'animal et la durée de la phase de massage).

Chaque cycle complet est obtenu en quatre étapes correspondant aux quatre positions du distributeur - (figures 2, 3, 4 et 5). Pendant 200 millisecondes (ms), le distributeur 10 occupe la position de la figure 2 : une dépression représentée par un bloc 202, 302 est transmise respectivement aux conduits de sortie 2, 3. Pendant les 300 ms suivantes, le distributeur occupe la position de la figure 3 : une dépression 203 est transmise au conduit de sortie 2 et de l'air atmosphérique (espace 303 entre blocs) est transmis au conduit de sortie 3.

Pendant 200 ms à nouveau, le distributeur occupe la position de la figure 4 : une dépression 204, 304 est transmise aux deux conduits de sortie. Enfin, pendant les 300 ms restantes du cycle, le distributeur occupe la position de la figure 5 : de l'air atmosphérique 205 est transmis au conduit de sortie 2 tandis qu'une dépression est communiquée au conduit de sortie 3. On peut constater que les cycles obtenus sont bien en opposition de phase et présentent le rapport cyclique désiré.

On notera que le moteur de pulsateur devra être choisi de façon que le temps nécessaire pour le faire tourner de 90° soit le plus faible possible devant le temps pendant lequel le distributeur doit occuper l'une des positions ci-dessus. La qualité de la continuité entre les quatre étapes du cycle dépend en effet directement de la vitesse de rotation du moteur du pulsateur : il existe en pratique un laps de temps $\Delta$ t séparant et chevauchant deux étapes successives quelconques 202-203 ou 303-304, et pendant lequel les liaisons entre les entrées et les sorties du pulsateur ne peuvent être établies correctement. Le laps de temps $\Delta$ t est notamment égal à 50 ms.

En fonction du temps passé par le distributeur dans chacune des quatre positions, on peut programmer aisément toute fréquence de traite et tout rapport cyclique désirés. On peut notamment réaliser un rapport cyclique égal à 500/500 en utilisant seulement les deux positions du distributeur correspondant aux figures 3 et 5 (un conduit de sortie en dépression et un autre relié à l'air atmosphérique). On peut par ailleurs supprimer la position de la figure 4 pour la remplacer par celle de la figure 2, puisque les liaisons obtenues sont les mêmes : il sera alors nécessaire d'inverser le sens de rotation du moteur pour passer de la position de la figure 3 à celle de la figure 2, puis de la position de la figure 2 à celle de la figure 5.

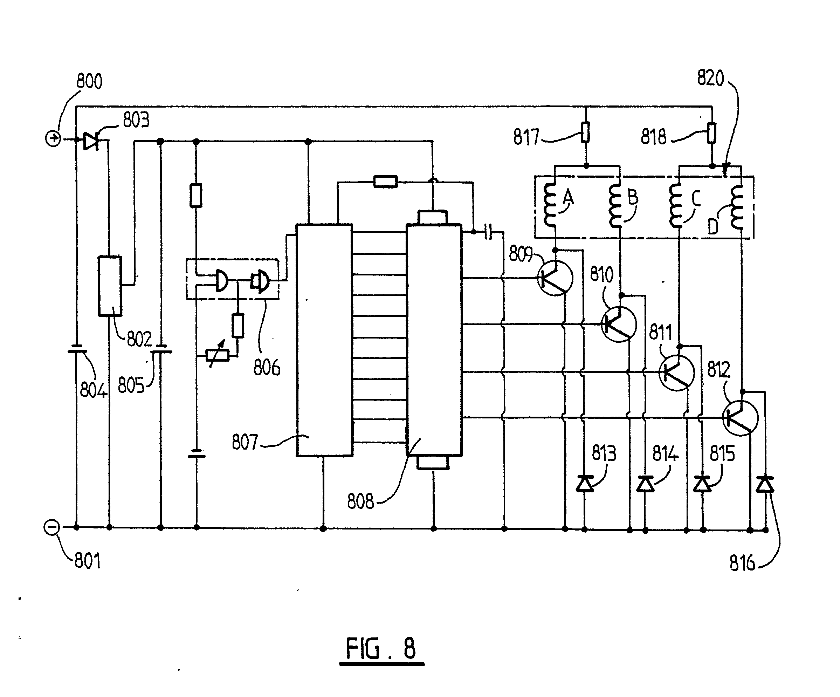

Le dispositif électronique de la figure 8 est un programmateur permettant de commander le moteur pas-à-pas du pulsateur selon l'invention d'une manière remarquablement simple, par comparaison avec les dispositifs connus de commande d'un moteur pas-à-pas en général. Ces dispositifs connus apparaissent en effet beaucoup trop complexes et coûteux pour être utilisés en tant que moyens de commande d'un pulsateur de traite. Le dispositif de la figure 8 présente deux bornes d'entrée positive 800 et négative 801 reliées en amont à une source de tension continue, de 24 volts dans le cas présent. Cette source de tension peut être obtenue à partir du réseau habituel 220 Volts, de façon connue en soi au moyen d'un transformateur abaisseur de tension et d'un redresseur non représentés. La source de tension continue est destinée à alimenter tous les pulsateurs de l'installation de traite considérée ainsi qu'un circuit de commande de ces pulsateurs. Ce circuit de commande comprend un régulateur de tension 802, par

7

exemple un régulateur intégré du type 2805 fabriqué notamment par la Société MOTOROLA, délivrant à sa sortie une tension régulée de 5 Volts. Le régulateur de tension 802 est alimenté par l'intermédiaire d'une diode 803. La tension à l'entrée du dispositif et en aval du régulateur de tension 802 est filtrée respectivement par deux capacités 804, 805.

Le régulateur de tension 802 alimente un générateur d'impulsions 806, par exemple du type 4093 de la Société MOTOROLA, un compteur 807, par exemple du type 4040 de la même société, et une mémoire 808, par exemple une mémoire morte adressable du type EPROM 2716 Q de la même société. Le générateur d'impulsions 806, le compteur 807 et la mémoire 808 sont branchés en cascade.

Quatre des sorties de la mémoire 808 sont utilisées pour commander respectivement quatre amplificateurs 809 à 812, par exemple des transistors de puissance du type DARLINGTON. Ces amplificateurs alimentent chacun l'un des quatre enroulements A, B, C et D d'un moteur pas-à-pas 820. La sortie de chaque amplificateur 809 à 812 est shuntée par une diode 813 à 816. Chaque amplificateur 809 à 812 et son enroulement A, B, C et D sont alimentés par la source de tension continue 24 Volts de départ et sont branchés à cet effet aux bornes 800, 801, les enroulements A, B, C et D étant reliés deux à deux à la borne positive 800 par l'intermédiaire d'une résistance 817, 818.

Par ailleurs, les quatre amplificateurs 809 à 812 alimentent, non seulement le moteur pas-à-pas 820, mais aussi une pluralité de moteurs identiques (non représentés), branchés en parallèle sur le premier et relatifs aux différents pulsateurs d'un premier groupe d'animaux. Pour commander un second groupe d'animaux, quatre autres sorties de la mémoire 808 sont mises à profit, qui commandent quatre autres amplificateurs (non représentés sur la figure) alimentant les enroulements d'une pluralité d'autres moteurs pas-à-pas montés en parallèle en aval des amplificateurs.

La commande du moteur pas-à-pas 820 s'effectue de la façon suivante. De manière connue en soi, l'immobilisation du moteur dans une position donnée est obtenue en maintenant sur ses quatre enroulements A, B, C et D un niveau de tension "0" ; la rotation du moteur sur un angle donné est obtenue en produisant successivement et à grande vitesse un grand nombre de rotations élémentaires. Ces rotations élémentaires sont par exemple déclenchées en répétant successivement quatre modes d'excitation I à IV des enroulements, qui servent de référence, comme indiqué dans le tableau ci-après :

| NOMBRE DE ROTATIONS ELEMENTAIRES | MODES D'EXCITATION | ENROULEMENTS | | | |
|---|---|---|---|---|---|
| | | A | B | C | D |
| 1 | I | 1 | 0 | 0 | 1 |
| 2 | II | 1 | 0 | 1 | 0 |
| 3 | III | 0 | 1 | 1 | 0 |
| 4 | IV | 0 | 1 | 0 | 1 |
| 5 | I | 1 | 0 | 0 | 1 |
| 6 | II | 1 | 0 | 1 | 0 |
| 7 | IIi | 0 | 1 | 1 | 0 |

"1" : représente un niveau de tension positif

"0" : représente un niveau de tension nul.

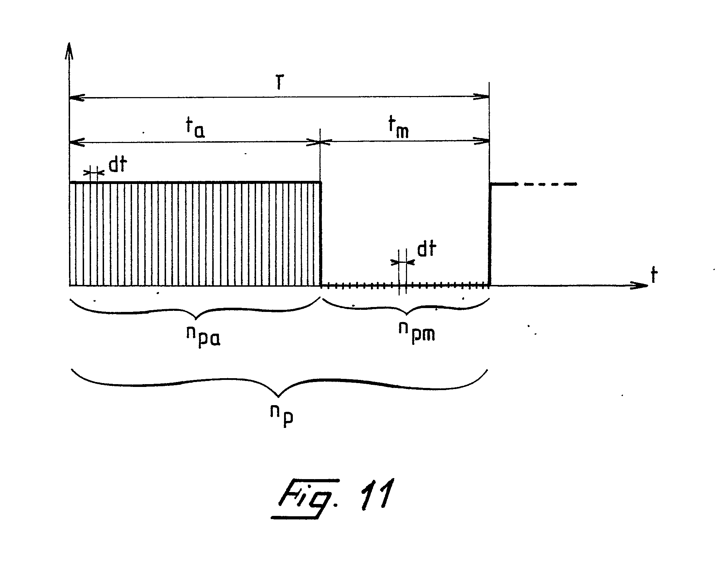

Selon l'invention, on découpe le cycle de traite en un grand nombre de pas d'une durée élémentaire et unique dt (figure 11). Si $n_p$ est le nombre total de pas, $n_{pa}$ sera le nombre de pas affectés à la phase d'aspiration de durée $t_a$, et $n_{pm}$ le nombre de pas affectés à la phase de massage de durée $t_m$. A chaque pas correspondent huit cases de la mémoire 808, appartenant à huit zones-mémoire distinctes, et dans chacune desquelles est stocké un bit ou niveau de tension "1" ou "0". Quatre zones-mémoire relatives au premier groupe d'animaux sont affectées respectivement aux quatre amplificateurs 809 à 812, c'est-à-dire aux quatre enroulements du moteur 820 et de tous ceux branchés en parallèle avec lui. Les quatre autres zones-mémoire sont affectées de la même façon au second groupe d'animaux.

Pour commander les deux groupes de moteurs, il suffira de lire séquentiellement le contenu de l'ensemble des cases-mémoire de chacune des huit zones-mémoire, ces huit zones-mémoire étant analysées simultanément. La lecture répétée de ces cases-mémoire permettra d'obtenir une succession de cycles correspondants.

La lecture des cases de la mémoire 808 se fait avantageusement au moyen du dispositif de la figure 8. Dans le case considéré où cette mémoire est adressable, une mémoire séquentielle aurait pu également convenir, le compteur 807 est un convertisseur décimal-binaire qui produit, pour chaque impulsion envoyée par le générateur d'impulsions 806, huit nombre binaires correspondant aux adresses des huit cases-mémoire devant être lues simultanément. Le contenu de ces cases est alors transféré aux huit sorties de la mémoire 808.

Les deux cycles de traite représentés sur les figures 6 et 7 sont relatifs à la traite alternée du premier groupe d'animaux. Pour les obtenir, on stocke dans chacune des quatre zones-mémoire correspondantes une série de niveaux de tension "0" correspondant à l'immobilisation des moteurs sur une durée de 150 millisecondes (ms), puis une série de niveaux de tension "0" ou "1", conformément aux modes d'excitation du tableau précité, et correspondant à un certain nombre de rotations élémentaires des moteurs sur une durée totale $\Delta t$ de 50 ms et pour une rotation totale de 90°. On a ainsi programmé les étapes d'aspiration 202, 302 suivies d'une rotation de 90° des moteurs, c'est-à-dire une rotation de 90° des distributeurs 10.

On stocke à la suite une nouvelle série de niveaux de tension "0" pour immobiliser les moteurs pendant 250 ms (étapes d'aspiration 203 ou de massage 303), puis un certain nombre de modes d'excitation correspondant à une nouvelle rotation identique à la première sur une durée $\Delta t$ de 50 ms.

Les étapes restantes du cycle de traite 204, 205 ou 304, 305 sont obtenues de façon analogue. On notera que la durée de chaque étape est bien de 200 ou 300 ms comme recherché, mais l'immobilisation du distributeur de chaque pulsateur n'intervient que pendant 150 ou 250 ms respectivement : les 50 ms restants correspondent au changement de position du distributeur.

Les cycles de traite relatifs à la traite alternée du second groupe d'animaux seront obtenus de la même façon, en tenant compte, au début de la programmation, du décalage $t_d$ (figure 13) qui doit exister par rapport aux cycles de traite du premier groupe d'animaux.

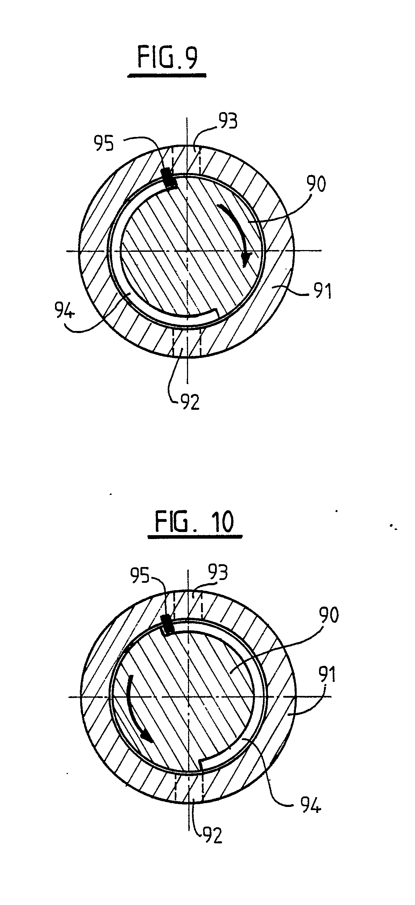

Dans le cas où la rotation du distributeur est choisie sur 180° seulement, ou sur toute autre portion angulaire nécessitant l'inversion du sens de rotation du distributeur, il sera très avantageux de prévoir des moyens de butée mécanique pour limiter l'angle de rotation du distributeur. Ainsi, on a représenté sur les figures 9 et 10 un distributeur 90 et un support de moteur 91 analogues à ceux de la figure 1. Le support de moteur 91 présente donc dux trous traversants diamétralement opposés 92, 93.

Sur la paroi latérale du distributeur 90 est pratiquée une gorge 94 qui s'étend périphériquement sur un angle de 180°, et dans un plan parallèle au plan général du distributeur 90. Par ailleurs, une goupille 95 est montée dans la paroi latérale intérieure du support de moteur 91, de façon à s'étendre radialement, et à dépasser de cette paroi sur une longueur au plus égale à la profondeur de la gorge 94 du distributeur 90.

Des évidements non représentés sont prévus sur la paroi latérale du distributeur 90 pour autoriser le montage du support de moteur 91 sur le distributeur 90, malgré la présence de la goupille 95.

Le distributeur 90 peut donc tourner sur lui-même de 180°, la goupille 95 se trouvant toujours dans la gorge 94. Lorsque l'une des deux extrémités de la gorge 94 vient buter contre la goupille 95, le distributeur est arrêté.

En utilisation, le distributeur 90 occupe, avant la mise en marche de son moteur, une position angulaire aléatoire qui ne correspond en général pas à l'une des positions des figures 2, 3 ou 5. Lors de la mise en marche du moteur, le distributeur 90 tourne sur un certain angle jusqu'à venir en butée sur la goupille 95 : le moteur "patine" en conséquence puis provoque une nouvelle rotation, cette fois-ci à partir de l'une des deux positions de référence des figures 3 et 5.

On supprime aussi avantageusement l'emploi d'un codeur complexe et coûteux, tel qu'un codeur optique, qui serait utilisé pour détecter chacune des positions angulaires du distributeur afin de ramener ce dernier à une position de référence.

On notera que le dispositif électronique selon l'invention permet d'effectuer une traite alternée et décalée de façon très simple en stockant deux types d'informations élémentaires "0" et "1" dans une mémoire. Par exemple (figure 4) connaissant le nombre $N_c$ de cycles de traite par minute, défini pour une catégorie donnée d'animaux, on peut calculer la période T du cycle et le nombre de pas $n_p$ par cycle, de la façon suivante :

$$T = \frac{60 \ (secondes)}{(secondes) \ N_c} \quad et \quad n_p = \frac{T}{dt}$$

- Pour une vache, $N_c = 60$ donc $T = \frac{60}{60} = 1$ seconde (ou 1000 ms)

et $n_p = \frac{1000 \ ms}{10 \ ms} = 100$

- Pour une chèvre, $N_c = 90$ donc $T = \frac{60}{60} = 0,67$ seconde soit 670 ms

et $n_p = \frac{670 \ ms}{10 \ ms} = 67$

Légende : $N_c$ : nombre de cycles/minute
T : période d'un cycle (en secondes)
$n_p$ : nombre de pas par cycle
dt : durée élémentaire d'un pas (en millisecondes)

Ainsi, en prévoyant 100 pas et 67 pas respectivement pour une vache et une chèvre, on fixe la durée d'un cycle de traite, c'est-à-dire encore la vitesse de traite. Par ailleurs, le rapport cyclique $\tau = ta/tm$ (figure 4) détermine le choix des nombres de pas $n_{pa}$ et $n_{pm}$.

Le nombre de pas $n_{pd}$ nécessaire au décalage des cycles de traite de l'animal C par rapport à ceux de l'animal D (figure 13) se calcule simplement :

$$n_{pd} = \frac{t_d}{dt}$$

$t_d$ = durée de décalage choisie ; dt = durée élémentaire d'un pas

On notera que, si l'on ramène la durée d'un pas de 10 ms à 1ms, on augmente d'un facteur 10 la précision des paramètres de traite puisque l'on multiplie de façon correspondante le nombre total de pas $n_p$.

Selon un mode de réalisation très avantageux du dispositif selon l'invention, la mémoire 308 est prévue sous la forme d'une cassette séparée, enfichable sur le support du dispositif. On peut alors mémoriser dans différentes cassettes plusieurs programmes de traite adaptés à des types différents d'animaux, ou tenant compte des cahiers des charges particuliers des différents utilisateurs. Ainsi, le dispositif est adaptable à toute demande ou modification, par simple changement de la cassette.

Il faut remarquer que le pulsateur à moteur pas-à-pas s'avère être d'une grande précision. Certes, en raison du laps de temps $\Delta t$ (figures 6 et 7) nécessaire à sa rotation, il n'est pas possible d'obtenir exactement le cycle théorique souhaité. Mais ce laps de temps est bien défini et n'est pas sujet à modification. La période T du cycle (figure 11) est donc elle-même définie avec une grande précision. Par ailleurs, la mise en rotation du moteur peut être effectuée à un instant bien précis et à partir d'une position angulaire bien précise.

Il en résulte que d'une part l'opposition de phase entre la traite des premiers pis et des seconds pis de l'animal C (figure 13) et d'autre part le décalage $t_d$ entre la traite de l'animal C et celle de l'animal D, sont obtenues aisément. La Demanderesse estime que seul le moteur pas-à-pas est à même d'effectuer une traite aussi complexe.

De plus, le dispositif électronique selon l'invention permet de commander, à lui seul, tous les moteurs pas-à-pas des différentes pulsateurs. Un synchronisme entre les huit signaux parvenant aux deux groupes de moteurs est donc assuré, puisqu'ils proviennent de la même mémoire 808 et sont délivrés grâce à la même impulsion du générateur d'impulsions 806.

## Revendications

1.-Procédé de traite alternée concernant l'ensemble des animaux d'une salle de traite, dans lequel on exerce une aspiration (160) sur des premiers pis de chaque animal (C) pour en tirer le lait, puis on soustrait ces premiers pis à ladite aspiration pour effectuer leur massage (163) pendant qu'on exerce une aspiration (171) sur des seconds pis de l'animal (C), procédé caractérisé par le fait qu'on sépare l'ensemble des animaux en deux groupes, une aspiration simultanée sur des premiers pis des animaux (C) du premier groupe étant exercée pendant un intervalle de temps décalé par rapport à celui pendant lequel une aspiration simultanée est exercée sur des premiers pis des animaux (D) du second groupe.

2.-Procédé selon la revendication 1, dans lequel on effectue le décalage ($t_d$) susdit de façon que la durée de coïncidence (103, 104) entre les deux intervalles de temps correspondant respectivement aux opérations de massage des premiers pis des animaux (C) du premier groupe et des animaux (D) du second groupe soit la plus faible possible.

3.-Procédé selon la revendication 2, dans lequel le décalage ($t_d$) susdit est égal à la moitié de la durée de la phase de massage.

4.-Pulsateur de traite comprenant un corps (1), une entrée d'air atmosphérique (18) et une entrée (9) raccordée à une canalisation à vide, au moins une sortie (2), un distributeur (10) qui est monté rotatif par rapport audit corps (1), entre lesdites entrées (9,18) et ladite sortie (2), et des moyens d'entraînement en rotation (19) dudit distributeur (10), ledit distributeur (10) étant agencé de façon que dans au moins une position angulaire prédéterminée de ce dernier ladite sortie (2) est reliée à ladite entrée d'air atmosphérique (18), tandis que dans au moins une autre position angulaire prédéterminée cette sortie (2) est reliée à ladite entrée (9) raccordée à la canalisation à vide, pulsateur caractérisé en ce que lesdits moyens d'entraînement en rotation du distributeur comprennent un moteur électrique pas-à-pas (19).

5.-Pulsateur selon la revendication 4, qui comprend des moyens de butée mécanique (94, 95) pour limiter l'angle de rotation du distributeur (90) par rapport au corps (91).

6.-Pulsateur selon la revendication 4 ou la revendication 5, dans lequel ledit moteur électrique pas-à-pas comporte un nombre déterminé d'enroulements (A, B, C, D) et est commandé par un programmateur qui comprend :
-des moyens d'alimentation en énergie électrique,
-un générateur d'impulsions (806) relié à ces moyens d'alimentation,
-un compteur (807) pour compter les impulsions dudit générateur d'impulsions (806),
-une mémoire (808) comprenant plusieurs zones-mémoire distinctes en nombre au moins égal au nombre d'enroulements (A, B, C, D) dudit moteur électrique pas-à-pas et dans chacune desquelles sont stockés des bits en nombre au moins égal au nombre d'impulsions par cycle de traite, et relatifs à l'excitation de l'un desdits enroulements (A, B, C, D), et
-des moyens (809 à 812) pour transmettre les signaux de sortie provenant desdites zones-mémoire aux enroulements (A, B, C, D) dudit moteur électrique pas-à-pas.

7.-Pulsateur selon la revendication 6, dans lequel la mémoire (808) est adressable, le compteur (807) étant un convertisseur décimal-binaire qui produit, pour chaque impulsion envoyée par le générateur d'impulsions (806), un nombre binaire déterminé adressant la mémoire (808).

8.-Pulsateur selon la revendication 6 ou la revendication 7, dans lequel la mémoire (808) comporte une cassette séparée enfichable.

0 230 178

FIG. 1

FIG 2 A

FIG 2

FIG 2B

FIG 3

FIG 3 B

FIG 4

FIG. 5

## FIG. 6

conduit de sortie 2

202  203  204

205

temps

Δt  Δt  Δt  Δt  Δt

## FIG. 7

conduit de sortie 3

302  304  305

303

temps

Δt  Δt  Δt  Δt  Δt

FIG . 8

## FIG.9

## FIG. 10

*Fig. 11*

_Fig._ 12    ( ART ANTERIEUR )

_Fig._ 13

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,Y | FR-A-2 230 289 (ALFA-LAVAL AB) * Page 1, lignes 24-31; figure 1 * | 1,2 | A 01 J   5/10 A 01 J   5/04 |
| Y | FR-A-2 345 072 (ALFA-LAVAL AB) * Page 3, lignes 5-15; figure 1 * | 1,2 | |
| A | * Page 11, ligne 19 - page 12, ligne 31; page 18, ligne 4 - page 19, ligne 11; figures 5,6 * | 6-7 | |
| D,A | FR-A-2 363 279 (A. MANUEL) * Page 1, ligne 19 - page 3, ligne 8; figures 1-7 * | 1-3,4 | |
| D,A | US-A-3 499 465 (W.R. ROOP) * Colonne 1, lignes 28-63; colonne 3, lignes 4-26; figures 1-7 * | 4 | DOMAINES TECHNIQUES RECHERCHES (Int. Cl.4)  A 01 J |
| D,A | GB-A- 622 541 (FARM EQUIPMENT CO. LTD) | | |

--- --- ---

Le présent rapport de recherche a été établi pour toutes les revendications

| Lieu de la recherche | Date d'achèvement de la recherche | Examinateur |
|---|---|---|
| LA HAYE | 12-02-1987 | NEHRDICH H.J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82